# EUROPÄISCHE PATENTSCHRIFT

(11) **EP 2 085 177 B1**
(45) Veröffentlichungstag und Bekanntmachung des Hinweises auf die Patenterteilung: **14.07.2010**
(21) Anmeldenummer: 09405010.1
(22) Anmeldetag: 19.01.2009
(51) Int. Cl.: B23Q 3/06, B23Q 3/12, B25B 1/06, B25B 5/06, B25B 1/24

(54) **Spanneinrichtung zum Festspannen von Werkstücken**
Tensioning device for tensioning workpieces
Dispositif de serrage pour le serrage fixe de pièces usinées

(30) Priorität: 04.02.2008 CH 1512008
(43) Veröffentlichungstag der Anmeldung: 05.08.2009
(73) Patentinhaber: Erowa AG, 5734 Reinach (CH)
(72) Erfinder: Sandmeier, Bruno, 5708 Birrwil (CH)
(74) Vertreter: Rottmann, Richard

(56) Entgegenhaltungen:
- EP-A- 0 201 298
- EP-A- 0 267 117
- EP-A- 0 972 613
- DE-A1- 4 423 932
- US-A- 4 901 402

## Beschreibung

Die vorliegende Erfindung bezieht sich auf eine gemäss dem Oberbegriff des Anspruchs 1 ausgebildete Spanneinrichtung zum Festspannen von Werkstücken.

Gattungsgemässe Spanneinrichtungen dienen insbesondere dem positionsgenauen Festlegen von zu bearbeitenden Werkstücken im Bearbeitungsbereich einer Werkzeugmaschine. Zum Halten oder Festspannen des jeweiligen Werkstücks ist die Spanneinrichtung üblicherweise mit einem Werkstückträger versehen.

Der Werkstückträger kann entweder direkt am Arbeitstisch der Werkstückmaschine befestigt werden oder mittels eines Spannfutters, wobei der Werkstückträger in letzterem Fall Mittel zum Fixieren an dem Spannfutter sowie Mittel zum positionsgenauen Festlegen an dem Spannfutter aufweist. Die Mittel zum positionsgenauen Festlegen an dem Spannfutter sollen insbesondere eine exakte Positionierung in X- und Y-Richtung, sowie ggf. in Z-Richtung ermöglichen.

Bei einer Serienfertigung werden die zu bearbeitenden Werkstücke -Rohteile-üblicherweise direkt in die Werkzeugmaschine eingelegt, beispielsweise über einen 6-Achsen Roboter. Bei Kleinserien werden die zu bearbeitenden Werkstücke auf Paletten aufgespannt, welche dann manuell oder automatisch in die Werkzeugmaschine eingewechselt werden. Bei mittleren Serien hingegen ist das Aufspannen der Werkstücke entweder sehr aufwändig, oder die Spanneinrichtung bzw. der Werkstückträger ist vergleichsweise teuer.

Die Aufgabe der Erfindung besteht nun darin, eine gemäss dem Oberbegriff des Patentanspruchs 1 ausgebildete Spanneinrichtung zu schaffen, welche sich insbesondere für die Fertigung mittlerer Serien eignet, wobei die Spanneinrichtung einfach aufgebaut und kostengünstig zu fertigen sein soll und wobei die zu bearbeitenden Werkstücke damit schnell, einfach und sicher im Werkstückträger festspannbar sein sollen.

Diese Aufgabe wird mit einer Spanneinrichtung gelöst, welche mit den im Anspruchs 1 angeführten Merkmalen versehen ist.

Indem die Spanneinrichtung mit einem Werkstückträger versehen ist, der zumindest zwei materialelastisch auslenkbare Spannbacken zum Halten von Werkstücken aufweist, wird die grundsätzliche Voraussetzung für eine einfach aufgebaute Spanneinrichtung geschaffen, mittels welcher die zu bearbeitenden Werkstücke schnell, einfach und sicher festsgespannt werden können.

Bevorzugte Ausführungsformen des Erfindungsgegenstandes sind in den abhängigen Ansprüchen 2 bis 15 umschrieben.

So ist einer bevorzugten Weiterbildung vorgesehen, dass die Spannbacken mit Aufsatzbacken versehen sind, welche in Relation zu der jeweiligen Spannbacke quer zum Schlitz verschiebbar sind, so dass der lichte Abstand zwischen den Aufsatzbacken veränderbar ist. Eine derart ausgebildete Spanneinrichtung ist universell einsetzbar.

Die Erfindung wird im Folgenden anhand eines Ausführungsbeispiels näher erläutert. In den Zeichnungen zeigt:
- Fig. 1: einen Werkstückträger in einer perspektivischen Ansicht;
- Fig. 2: den Werkstückträger gemäss Fig. 1 in einer Ansicht von der Seite;
- Fig. 3: einen Querschnitt durch den Werkstückträger,
- Fig. 4: die Spanneinrichtung bestehend aus dem Werkstückträger gemäss Fig. 1 sowie einer andeutungsweise eingezeichneten Betätigungsvorrichtung;
- Fig. 5: den Werkstückträger in einer perspektivischen Ansicht von unten, und
- Fig. 6: den Werkstückträger gemäss Fig. 2 zusammen mit einem festgespannten Werkstück und einem andeutungsweise eingezeichneten Spannfutter.

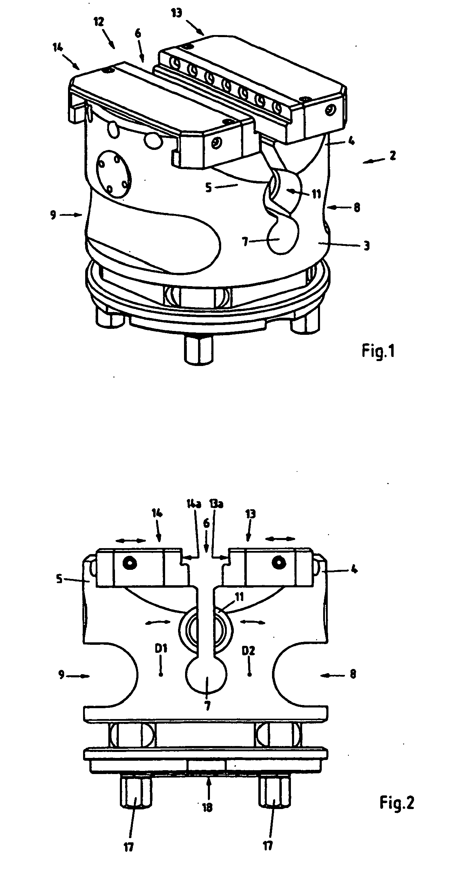

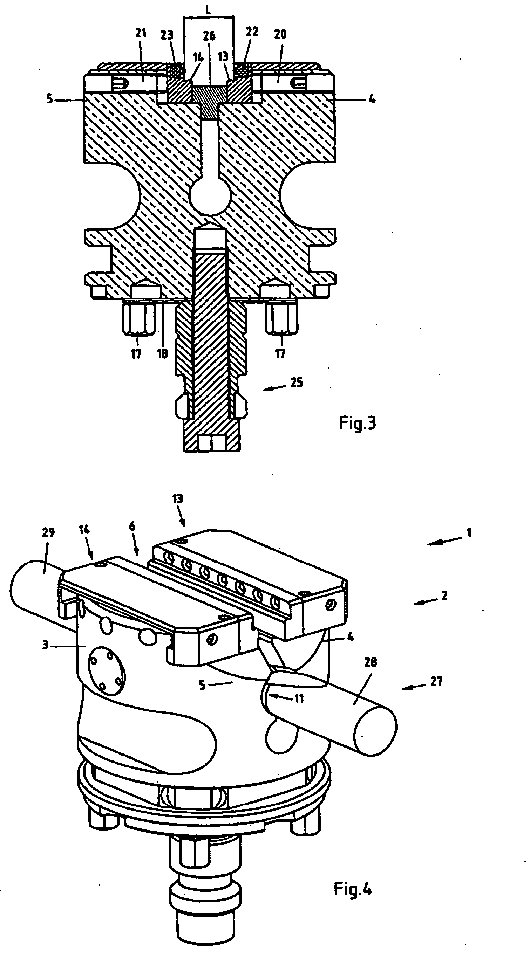

Anhand der Figuren 1 und 2 soll der grundsätzliche Aufbau der erfindungsgemässen Spanneinrichtung, namentlich des Werkstückträgers 2, näher erläutert werden. Neben dem Werkstückträger 2 umfasst die Spanneinrichtung noch eine aus den ersten beiden Figuren nicht ersichtliche Betätigungsvorrichtung, welche anschliessend anhand der Fig. 4 noch näher erläutert wird. Die Fig. 1 zeigt den Werkstückträger 2 in einer perspektivischen Ansicht, während Fig. 2 den Werkstückträger 2 von der Seite zeigt. Der dem Festspannen von zu bearbeitenden Werkstücken dienende Werkstückträger 2 weist einen im wesentlichen zylindrisch ausgebildeten Hauptkörper 3 auf, der zur Bildung von zwei Spannbacken 4, 5 mit einem zentralen Schlitz 6 versehen ist. Der Schlitz 6 geht im unteren Endbereich in eine runde Ausnehmung 7 über. Um die zum materialelastischen Auslenken der beiden Spannbacken 4, 5 benötigte Auslenkkraft bzw. die erzielbare Spannkraft gezielt zu beeinflussen, können beidseitig der Ausnehmung 7 radiale Einschnitte 8, 9 in den Hauptkörper 3 eingelassen werden, die parallel zum Schlitz 6 verlaufen. Um Spannungsrisse zu vermeiden, sind die genannten Ausnehmungen 7, 8, 9 vorzugsweise rund gestaltet. Der Hauptkörper 3 ist einstückig ausgebildet und besteht vorzugsweise aus gehärtetem, rostbeständigem Stahl.

Auf beiden Seiten des Schlitzes 6 ist je eine sich konisch verjüngende Ausnehmung 11, 12 in den Hauptkörper 3 eingelassen, in welche je ein Aufspreizwerkzeug -Konus- zum Aufspreizen der beiden Spannbacken 4, 5 einführbar ist. Die beiden Aufspreizwerkzeuge bilden einen Bestandteil der Betätigungsvorrichtung, wie anschliessend noch näher erläutert wird.

Die jeweilige Spannbacke 4, 5 ist auf der Oberseite mit einer Aufsatzbacke 13, 14 versehen, welche quer zum Schlitz 6 in Relation zu der jeweiligen Spannbacke 4, 5, wie durch Doppelpfeile angedeutet, verschiebbar und arretierbar ist, so dass der lichte Abstand zwischen den beiden Aufsatzbacken 13, 14 veränderbar ist. Zum Verschieben der jeweiligen Aufsatzbacke 13, 14 sind pro Spannbacke 4, 5 drei Stellschrauben vorgesehen, die aus dieser Darstellung jedoch nicht ersichtlich sind. Die Aufsatzbacken 13, 14 sind mittels einer Linearführung -Gleitführung- an der jeweiligen Spannbacke 4, 5 befestigt. Vorzugsweise sind die Aufsatzbacken 13, 14 nicht nur verschiebbar, sondern auch austauschbar gestaltet, so dass sie den Anforderungen entsprechend ggf. ausgetauscht werden können.

Ggf. können die beiden Spannbacken 4, 5 über eine Zugstange zusätzlich miteinander verbunden werden. Eine solche Zugstange wird beim Aufspreizen der beiden Spannbacken 4, 5 materialelastisch mitgedehnt und dient dazu, dass nach dem Entfernen der Aufspreizwerkzeuge die materialelastische Rückstellkraft der beiden Spannbacken 4, 5 erhöht wird, womit natürlich auch die Spannkraft entsprechend erhöht wird. Es versteht sich, dass das Material der Zugstange sowie deren Dimensionierung den Anforderungen entsprechend gewählt bzw. variiert werden kann. Natürlich kann bei entsprechender Dimensionierung des Hauptkörpers 3 auf eine Zugstange verzichtet werden.

Im vorliegenden Beispiel ist der Werkstückträger 2 als Palette ausgebildet, welche auf der Unterseite mit Stützfüssen 17 sowie einer Zentrierscheibe 18 versehen ist. Die Zentrierscheibe 18 ist mit vier Zentneröffnungen zum positionsgenauen Festlegen des Werkstückträgers 2 an einem Spannfutter versehen. Die Stützfüsse 17 dienen dem Befestigen der Zentrierscheibe 18 am Hauptkörper 3. Zudem wirken die Stützfüsse 17 als Z-Auflage beim Festspannen des Werkstückträgers 2 am Spannfutter. Die Stützfüsse 17 sind mittels eines Gewindes direkt im Hauptkörper 3 fixiert.

Die Fig. 3 zeigt einen Querschnitt durch den Werkstückträger 2. Aus dieser Darstellung ist insbesondere die einstückige Ausbildung des Hauptkörpers 3 ersichtlich. Zudem ist die mittels den Stützfüssen 17 auf der Unterseite des Hauptkörpers 3 befestigte Zentrierscheibe 18 erkennbar.

Im weiteren ist pro Spannbacke 4, 5 je eine dem Verstellen der Aufsatzbacken 13, 14 dienende Stellschraube 20, 21 ersichtlich. Pro Spannbacke 13, 14 sind insgesamt drei solcher Stellschrauben 20, 21 vorgesehen, mittels welchen die Spannbacken 13, 14 quer zum Schlitz verschiebbar sind. Die Stellschrauben 20, 21 sind vorzugsweise selbsthemmend ausgebildet, so dass die jeweilige Spannbacke 13, 14 nach einem Verschieben in der entsprechenden Position fixiert ist und sich auch nach wiederholtem Aufspreizen der Spannbacken 4, 5 nicht verstellt. Natürlich können auch separate Arretiermittel vorgesehen werden, mittels welchen die Stellschrauben 20, 21 und/oder die Spannbacken 13, 14 in der jeweiligen Position fixiert werden.

Zudem ist erkennbar, dass die Spannbacken 13, 14 mit spitzen Erhebungen 22, 23 in der Form von Domen versehen sind. Diese Erhebungen 22, 23 begünstigen ein formschlüssiges Fixieren eines Werkstücks, indem sie mit ihrer Spitze in die Oberfläche des jeweiligen Werkstücks eindringen. Die Erhebungen 22, 23 sind vorzugsweise aus einem sehr harten Material gefertigt. Schliesslich ist ein auf der Unterseite am Hauptkörper 3 mittels eines Gewindes befestigter Spannzapfen 25 ersichtlich, mittels welchem der Werkstückträger 2 an dem Spannfutter (nicht dargestellt) fixiert werden kann.

Um die Aufsatzbacken 13, 14 auf die Dicke des zu spannenden Werkstücks einzustellen, wird vorzugsweise ein Referenzelement 26 in den Werkstückträger 2 eingelegt und die Aufsatzbacken 13, 14 mittels der Stellschrauben 20, 21 soweit verschoben, dass sie satt an den Seitenflächen des Referenzelements 26 zur Anlage kommen. Das Referenzelement 26 ist derart dimensioniert, dass der lichte Abstand L zwischen den beiden Aufsatzbacken 13, 14 nach deren Justieren um einige Zehntelmillimeter geringer ist als die Dicke des zu spannenden Werkstücks. Um ein Werkstück in dem Werkstückträger 2 festspannen zu können, müssen die beiden Spannbacken 4, 5 zuerst zumindest um den genannten Betrag von einigen Zehntelmillimetern aufgespreizt werden, damit das zu spannende Werkstück zwischen die Aufsatzbacken 13, 14 eingefügt/eingeschoben werden kann. Es versteht sich, dass für unterschiedlich dicke Werkstücke entsprechend unterschiedlich dicke Referenzelemente zur Verfügung stehen.

In der unbelasteten Ausgangsstellung des Werkstückträgers 2 verlaufen die Spannflächen 13a, 14a (Fig. 2) von einander gegenüberliegenden Aufsatzbacken 13, 14 in Z-Richtung vorzugsweise nicht ganz parallel, sondern der lichte Abstand zwischen den beiden Spannflächen 13a, 14a nimmt nach innen in Z-Richtung leicht zu. Die Neigung der Spannflächen 13a, 14a ist so gewählt, dass sie im Wirkzustand parallel verlaufen, da die beiden Spannbacken 4, 5 zur Fixierung eines Werkstücks im Wirkzustand leicht aufgeschwenkt sind.

Die Fig. 4 zeigt die gesamte Spanneinrichtung 1 bestehend aus dem Werkstückträger 2 sowie der schematisch dargestellten Betätigungsvorrichtung 27. Die Betätigungsvorrichtung 27 umfasst insbesondere zwei Aufspreizwerkzeuge in der Form von Spreizkonussen 28, 29, welche dem Aufspreizen der beiden Spannbacken 4, 5 dienen. Die beiden Spreizkonusse 28, 29 sind an einer nicht näher dargestellten Mechanik befestigt, mittels welcher sie axial in die jeweilige, seitlich in den Schlitz übergehende konische Ausnehmung 11 einführbar sind, um die beiden Spannbacken 4, 5 materialelastisch auszulenken. Unter einem materialelastischen Auslenken bzw. Verschwenken der Spannbacken wird eine elastische, d.h. reversible Verformung des Hauptkörpers 3 im Bereich der Spannbacken 4, 5 verstanden. Die Konizität der Spreizkonusse 28, 29 ist so gewählt, dass keine Selbsthemmung in der jeweiligen Ausnehmung 11 auftritt. Üblicherweise werden die beiden Spannbacken 4, 5 mittels der Betätigungsvorrichtung 27 um einige Zehntelmillimeter materialelastisch aufgespreizt. Nachdem die beiden Spannbacken 4, 5 um den genannten Betrag ausgespreizt sind, kann ein Werkstück zwischen die beiden Aufsatzbacken 13, 14 eingeführt werden. Nach dem Lösen bzw. Entfernen der Betätigungsvorrichtung bewegen sich die beiden Spannbacken 4, 5 durch die materialelastische Rückstellkraft des aus Stahl gefertigten Hauptkörpers 3 wieder nach innen in Richtung ihrer Ausgangsstellung und fixieren dabei das genannte Werkstück.

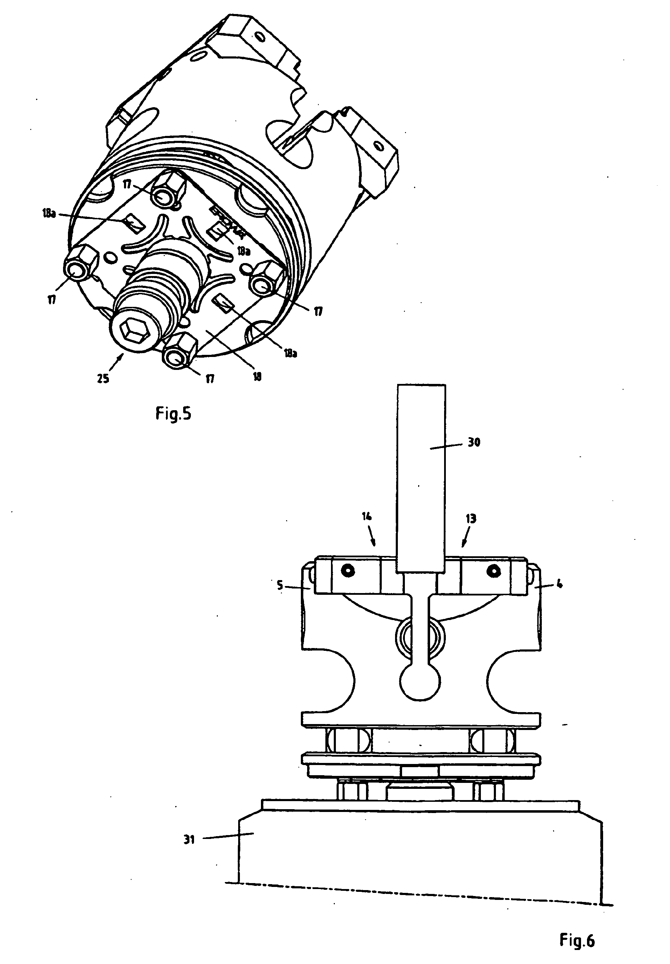

Die Fig. 5 zeigt den Werkstückträger 2 in einer perspektivischen Ansicht von unten. Aus dieser Ansicht ist insbesondere die mittels den Stützfüssen 17 auf der Unterseite des Hauptkörpers 3 befestigte Zentrierscheibe 18 ersichtlich. Die Zentrierscheibe 18 ist mit vier Zentneröffnungen 18a versehen, welche eine exakte Positionierung des Werkstückträgers 2 in X- und Y-Richtung an einem Spannfutter ermöglichen. Beim Festspannen des Werkstückträgers 2 an dem Spannfutter wirkt die plane Stirnseite der Stützfüsse 17 als Z-Auflage. Der Werkstückträger 2 wird mittels des Spannzapfens 25 an dem Spannfutter festgespannt.

Fig. 6 zeigt den Werkstückträger 2 gemäss Fig. 2 zusammen mit dem darin festgespannten Werkstück 30 und einem andeutungsweise eingezeichneten Spannfutter 31. Nachdem die beiden Spannbacken 4, 5 des Werkstückträgers 2 um einige Zehntelmillimeter über die Dicke des zu spannenden Werkstücks 30 aufgespreizt sind, kann das Werkstück 30 zwischen die beiden Spannbacken 4, 5 bzw. Aufsatzbacken 13, 14 eingeführt werden. Sobald das Werkstück 30 korrekt positioniert ist, können die beiden Spreizkonusse 28, 29 (Fig. 4) entfernt werden, wodurch die Spannbacken 4, 5 in ihren Ausgangszustand zurückfedern und das Werkstück 30 fixieren. Ein eingespanntes Werkstück 30 wird üblicherweise mit einer Spannkraft von mehreren Kilonewton bis zu einigen Dutzend Kilonewton fixiert.

Das Einspannen eines Werkstücks in den Werkstückträger 2 findet üblicherweise an einem Rüstplatz statt. Der Rüstplatz ist dazu mit der vorgängig beschriebenen Betätigungsvorrichtung 27 zum Aufspreizen der Spannbacken 4, 5 versehen. Durch die Zweiteilung der Spanneinrichtung 1 in einen passiven Werkstückträger 2 und eine aktive Betätigungsvorrichtung 27 kann die Spanneinrichtung 1 besonders einfach gestaltet werden.

Die erfindungsgemäss ausgebildete Spanneinrichtung 1 kann kostengünstig hergestellt werden und erlaubt ein einfaches, schnelles und positionsgenaues Fixieren von Werkstücken. Durch die Zweiteilung der Spanneinrichtung 1, passiver Werkstückträger 2 und aktiver Betätiger, halten sich die Kosten der Spanneinrichtung, namentlich des jeweiligen Werkstückträgers 2, in Grenzen. Durch die verstellbaren Aufsatzbacken wird zudem sichergestellt, dass unterschiedliche Werkstücke mit unterschiedlichen Dicken an dem Werkstückträger 2 festgelegt und gehalten werden können.

Anstelle des gezeigten Ausführungsbeispiels sind im Rahmen der Erfindung natürlich auch andere Varianten von Spanneinrichtungen denkbar. Beispielsweise könnte der Werkstückträger derart gestaltet werden, dass die beiden Spannbacken zuerst materialelastisch zusammengedrückt werden müssen, damit ein Werkstück auf der Aussenseite der Spannbacken bzw. Aufsatzbacken fixiert werden kann. Das Werkstück könnte dazu beispielsweise mit einer Ausnehmung versehen sein, in welche die Spannbacken eingeführt werden können. Anstelle von konischen Ausnehmungen könnte der Werkstückträger auch mit Erhebungen versehen sein, an welchen die Betätigungsvorrichtung angreifen kann.

Ggf. könnte der Schlitz 6 und/oder die Ausnehmung 7 mit einem gummielastischen Material aufgefüllt werden. Dies würde einerseits die Verschmutzungsneigung reduzieren und andererseits würde sich das Schwingungsverhalten des Werkstückträgers 2 durch die dämpfende Wirkung des gummielastischen Materials verbessern.

Indem die Materialelastizität des Hauptkörpers, namentlich die materialelastische Rückstellkraft der Spannbacken, zum Festspannen eines Werkstücks genutzt wird, kann auf separate Betätigungselemente zum Verschieben und Festspannen der Spannbacken verzichtet werden.

Die erfindungsgemässe Spanneinrichtung eignet sich insbesondere für die Fertigung mittlerer Serien, wobei sie aufgrund ihrer Flexibilität natürlich auch für kleine und grosse Serien eingesetzt werden kann.

### Bezugszeichenliste

- 1.: Spanneinrichtung
- 2.: Werkstückträger
- 3.: Hauptkörper
- 4.: Spannbacke
- 5.: Spannbacke
- 6.: Schlitz
- 7.: runde Ausnehmung
- 8.: radialer Einschnitt
- 9.: radialer Einschnitt
- 10.:
- 11.: konische Ausnehmung
- 12.: konische Ausnehmung
- 13.: Aufsatzbacke
- 14.: Aufsatzbacke
- 15.:
- 16.:
- 17.: Stützfüsse
- 18.: Zentrierscheibe
- 18a: Zentneröffnungen
- 20.: Stellschraube
- 21.: Stellschraube
- 22.: Dom
- 23.: Dom
- 24.:
- 25.: Spannzapfen
- 26.: Referenzelement
- 27.: Betätigungsvorrichtung
- 28.: Spreizkonus
- 29.: Spreizkonus
- 30.: Werkstück
- 31.: Spannfutter
- 32.:
- 33.:
- 34.:
- 35.:
- 36.:
- 37.:
- 38.:
- 39.:
- 40.:
- 41.:
- 42.:
- 43.:
- 44.:
- 45.:
- 46.:
- 47.:
- 48.:
- 49.:
- 50.:
- 51.:
- 52.:
- 53.:
- 54.:
- 55.:
- 56.:
- 57.:
- 58.:
- 59.:
- 60.:
- 61.:
- 62.:
- 63.:
- 64.:
- 65.:
- 66.:
- 67:
- 68.:
- 69.:
- 70.:

## Patentansprüche

1. Spanneinrichtung (1) mit einem Werkstückträger (2) zum Halten von mittels einer Bearbeitungsmaschine zu bearbeitenden Werkstücken, wobei der Werkstückträger (2) Mittel (25) zum Fixieren an einem Spannfutter (31) sowie Mittel (18, 18a) zum positionsgenauen Festlegen an dem Spannfutter (31) aufweist, **dadurch gekennzeichnet, dass** der Werkstückträger (2) zumindest zwei materialelastisch auslenkbare Spannbacken (4, 5) zum Halten von Werkstücken (30) aufweist, welche derart ausgebildet sind, dass ein Werkstück durch die materialelastische Rückstellkraft der Spannbacken darin fixierbar ist.

2. Spanneinrichtung (1) nach Anspruch 1, **dadurch gekennzeichnet, dass** der Werkstückträger (2) einen Hauptkörper (3) aufweist, der mit einem durch die Spannbacken (4, 5) begrenzten Schlitz (6) versehen ist, wobei die Spannbacken (4, 5) quer zum Schlitz (6) materialelastisch auslenkbar sind.

3. Spanneinrichtung (1) nach Anspruch 2, **dadurch gekennzeichnet, dass** der Hauptkörper (3) einstückig ausgebildet ist und aus Metall, insbesondere gehärtetem und/oder rostbeständigem Stahl besteht.

4. Spanneinrichtung (1) nach Anspruch 2 oder 3, **dadurch gekennzeichnet, dass** die Spannbacken (4, 5) mit Aufsatzbacken (13, 14) versehen sind, welche quer zum Schlitz (6) verschiebbar und arretierbar sind, so dass der lichte Abstand (L) zwischen den Aufsatzbacken (13, 14) veränderbar ist.

5. Spanneinrichtung (1) nach einem der vorhergehenden Ansprüche, **dadurch gekennzeichnet, dass** die Spanneinrichtung eine Betätigungsvorrichtung (27) zum materialelastischen Aufspreizen und/oder Zusammendrücken der Spannbacken (4, 5) umfasst, wobei die Spannbacken (4, 5) durch die Betätigungsvorrichtung (27) zur Aufnahme eines Werkstücks (30) materialelastisch soweit auslenkbar sind, dass das Werkstück (30) nach dem Lösen der Betätigungsvorrichtung (27) durch die materialelastische Rückstellkraft der Spannbacken (4, 5) fixierbar ist.

6. Spanneinrichtung (1) nach Anspruch 5, **dadurch gekennzeichnet, dass** der Hauptkörper (3) des Werkstückträgers (2) mit Ausnehmungen (11, 12) und/oder Erhebungen versehen ist, an welchen die Betätigungsvorrichtung (27) angreifen kann, um die Spannbacken (4, 5) materialelastisch auszulenken.

7. Spanneinrichtung (1) nach Anspruch 6, **dadurch gekennzeichnet, dass** auf beiden Seiten des Schlitzes (6) je eine sich konisch verjüngende Ausnehmung (11, 12) in den Hauptkörper (3) eingelassen ist und die Betätigungsvorriclttung (27) zwei Aufspreizkonusse (28, 29) aufweist, welche zum Aufspreizen der Spannbacken (4, 5) in je eine der genannten Ausnehmungen (11, 12) einführbar sind.

8. Spanneinrichtung (1) nach einem der Ansprüche 4 bis 7, **dadurch gekennzeichnet, dass** die Spanneinrichtung (1) ein Referenzelement (26) zum Justieren des Abstands zwischen den Aufsatzbacken (13, 14) umfasst.

9. Spanneinrichtung (1) nach einem der Ansprüche 4 bis 8, **dadurch gekennzeichnet, dass** die Aufsatzbacken (13,14) austauschbar gestattet sind.

10. Spanneinrichtung (1) nach einem der vorhergehenden Ansprüche, **dadurch gekennzeichnet, dass** die Spannbacken (4, 5) bzw. die Aufsatzbacken (13, 14) zum kraft- und/oder formschlüssigen Fixieren eines Werkstücks (30) ausgebildet sind, wobei die Spannkraft durch materialelastisches Auslenken der Spannbacken (4, 5) bzw. deren materialelastische Rückstellkraft erzeugt wird.

11. Spanneinrichtung (1) nach Anspruch 2, **dadurch gekennzeichnet, dass** der Schlitz (6) im unteren Endbereich in eine runde Ausnehmung (7) übergeht.

12. Spanneinrichtung (1) nach einem der Ansprüche 4 bis 7, **dadurch gekennzeichnet, dass** die Aufsatzbacken (13, 14) mit Erhebungen (22, 23) und/oder Vertiefungen zum Erzielen eines Formschlusses mit dem zu spannenden Werkstück (30) versehen sind.

13. Spanneinrichtung (1) nach einem der vorhergehenden Ansprüche, **dadurch gekennzeichnet, dass** der Werkstückträger (2) auf der Unterseite mit einem Spannzapfen (25) zum Fixieren an einem Spannfutter (31) Versehen ist.

14. Spanneinrichtung (1) nach einem der vorergehenden Ansprüche, **dadurch gekennzeichnet, dass** der Werkstückträger (2) auf der Unterseite mit zumindest drei Zentrieröffnungen oder Zentrierzapfen zum positionsgenauen Festlegen an dem Spannfutter (31) versehen ist.

15. Spanneinrichtung (1) nach Anspruch 14, **dadurch gekennzeichnet, dass** der Hauptkörper (3) auf der Unterseite mit einer Zentrierscheibe (18) versehen ist, in welche die Zentneröffnungen (18a) eingelassen sind, wobei die Zentrierscheibe (18) mittels die Z-Auflage bildenden Distanzbolzen (17) an dem Hauptkörper (3) befestigt ist.

## Claims

1. Clamping device (1) comprising a workpiece carrier (2) for holding workpieces to be machined by means of a machine tool, the workpiece carrier (2) having means (25) for fixing to a chuck (31) and having means (18, 18a) for locating on the chuck (31) in a positionally accurate manner, **characterized in that** the workpiece carrier (2), for the purpose of holding workpieces (30), has at least two clamping jaws (4, 5), elastically deflectable in material, that are realized in such a way that a workpiece can be fixed therein by the elastic restoring force of the material of the clamping jaws.

2. Clamping device (1) according to Claim 1, **characterized in that** the workpiece carrier (2) has a main body (3), which is provided with a slot (6) delimited by the clamping jaws (4, 5), the clamping jaws (4, 5) being elastically deflectable in material transversely relative to the slot (6).

3. Clamping device (1) according to Claim 2, **characterized in that** the main body (3) is realized as a single piece and is composed of metal, in particular of hardened and/or rustproof steel.

4. Clamping device (1) according to Claim 2 or 3, **characterized in that** the clamping jaws (4, 5) are provided with jaw attachments (13, 14) that are displaceable transversely relative to the slot (6) and can be locked in place, such that the inside distance (L) between the jaw attachments (13, 14) is variable.

5. Clamping device (1) according to any one of the preceding claims, **characterized in that** the clamping device comprises an actuation device (27) for spreading apart and/or pressing together the clamping jaws (4, 5) by elasticity of material, the clamping jaws (4, 5) being elastically deflectable in material by the actuation device (27), for the purpose of receiving a workpiece (30), to such an extent that the workpiece (30), after the release of the actuation device (27), can be fixed in place by the elastic restoring force of the material of the clamping jaws (4, 5).

6. Clamping device (1) according to Claim 5, **characterized in that** the main body (3) of the workpiece carrier (2) is provided with recesses (11, 12) and/or protuberances, on which the actuation device (27) can act in order to deflect the clamping jaws (4, 5) by elasticity of material.

7. Clamping device (1) according to Claim 6, **characterized in that**, on both sides of the slot (6), there is let into the main body (3) a respective conically tapering recess (11, 12), and the actuation device (27) has two spreading cones (28, 29) that can be introduced, respectively, into one of the said recesses (11, 12) for the purpose of spreading apart the clamping jaws (4, 5).

8. Clamping device (1) according to any one of claims 4 to 7, **characterized in that** the clamping device (1) comprises a reference element (26) for adjusting the distance between the jaw attachments (13, 14).

9. Clamping device (1) according to any one of Claims 4 to 8, **characterized in that** the jaw attachments (13, 14) are designed so as to be exchangeable.

10. Clamping device (1) according to any one of the preceding claims, **characterized in that** the clamping jaws (4, 5), or the jaw attachments (13, 14), are realized for non-positively and/or positively fixing in place a workpiece (30), the clamping force being generated through elastic deflection of the material of the clamping jaws (4, 5), or elastic restoring force of the material of the latter.

11. Clamping device (1) according to Claim 2, **characterized in that** the slot (6) graduates, in the lower end region, into a round recess (7).

12. Clamping device (1) according to any one of Claims 4 to 7, **characterized in that** the jaw attachments (13, 14) are provided with protuberances (22, 23) and/or depressions for the purpose of achieving a positive engagement with the workpiece (30) to be clamped.

13. Clamping device (1) according to any one of the preceding claims, **characterized in that** the workpiece carrier (2) is provided, on the underside, with a clamping pin (25) for fixing to a chuck (31).

14. Clamping device (1) according to any one of the preceding claims, **characterized in that** the workpiece carrier (2) is provided, on the underside, with at least three centring openings or centring pins for locating on the chuck (31) in a positionally accurate manner.

15. Clamping device (1) according to Claim 14, **characterized in that** the main body (3) is provided, on the underside, with a centring plate (18), into which there are let the centring openings (18a), the centring plate (18) being fastened to the main body (3) by means of spacer bolts (17) that constitute the Z seat.

## Revendications

1. Dispositif de serrage (1) avec un porte pièce à usiner (2) pour le maintien d'une pièce à usiner à l'aide d'une machine d'usinage, sachant que le porte pièce à usiner (2) présente des moyen (25) de fixation à un mandrin de serrage (31) ainsi que des moyens (18, 18a) de positionnement précis sur le mandrin de serrage (31), **caractérisé en ce que** le porte pièce à usiner (2) présente au moins deux mâchoires de serrage (4, 5) pouvant être déviées par extension matérielle, servant à maintenir les pièces à usiner (30), lesquelles sont conçues de telle sorte qu'une pièce à usiner puisse être fixée dedans grâce à la force de rappel des mâchoires de serrage par extension matérielle.

2. Dispositif de serrage (1) selon la revendication 1, **caractérisé en ce que** le porte pièce à usiner (2) présente un corps principal pourvu d'une ouverture (6) délimitée par les mâchoires de serrage (4,5), sachant que les mâchoires de serrage (4, 5) peuvent être déviées perpendiculairement à l'ouverture (6) par extension matérielle.

3. Dispositif de serrage (1) selon la revendication 2, **caractérisé en ce que** le corps principal (3) est monobloc et en métal, tout particulièrement en acier durci et/ou anticorrosif.

4. Dispositif de serrage (1) selon la revendication 2 ou 3, **caractérisé en ce que** les mâchoires de serrage (4, 5) sont dotées de mâchoires rapportées (13, 14) pouvant être déplacées et bloquées perpendiculairement à l'ouverture (6) de telle sorte que l'écart (L) entre les mâchoires rapportées (13, 14) puisse être modifié.

5. Dispositif de serrage (1) selon l'une des revendications précédentes, **caractérisé en ce que** le dispositif de serrage comporte un système d'actionnement (27) servant à écarter et/ou resserrer les mâchoires de serrage (4, 5) par extension matérielle, sachant que pour la mise en place d'une pièce à usiner (30), les mâchoires de serrage (4, 5) peuvent être à ce point écartées par extension matérielle qu'après le déclenchement du système d'actionnement (27) la pièce à usiner (30) puisse être fixée après par la force de rappel des mâchoires de serrage (4, 5) par extension élastique.

6. Dispositif de serrage (1) selon la revendication 5, **caractérisé en ce que** le corps principal (3) du porte pièce à usiner (2) est doté de creux (11, 12) et/ou de saillies sur lesquelles le système d'actionnement (27) vient prendre, afin de dévier les mâchoires de serrage (4, 5) par extension matérielle.

7. Dispositif de serrage (1) selon la revendication 6, **caractérisé en ce que** sur les deux côtés de l'ouverture (6) est encastré un creux (11, 12) convergent de façon conique vers le corps principal (3) et que le système d'actionnement (27) présente deux connes d'écartement, lesquels peuvent être introduits dans le creux (11, 12) respectif susnommé pour écarter les mâchoires de serrage (4, 5).

8. Dispositif de serrage (1) selon l'une des revendications 4 à 7 **caractérisé en ce que** le dispositif de serrage (1) comporte un élément de référence (26) servant à ajuster l'écart entre les mâchoires rapportées (13, 14).

9. Dispositif de serrage (1) selon l'une des revendications 4 à 8, **caractérisé en ce que** les mâchoires rapportées (13, 14) peuvent être changées.

10. Dispositif de serrage (1) selon l'une des revendications précédentes **caractérisé en ce que** les mâchoires de serrage (4, 5) et les mâchoires rapportées (13, 14) sont conçues pour fixer une pièce à usiner (30) par entraînement par adhérence et/ou par serrage du moule, sachant que la force de serrage est générée par la déviation par extension matérielle des mâchoires de serrage (4, 5) et/ou leur force de rappel par extension matérielle.

11. Dispositif de serrage (1) selon la revendication 2, **caractérisé en ce que** l'ouverture (6) se termine à l'extrémité inférieure en un creux rond (7).

12. Dispositif de serrage (1) selon l'une des revendications 4 à 7 **caractérisé en ce que** les mâchoires rapportées (13, 14) sont dotées de saillies (22, 23) et/ou de cavités permettant un serrage par moulage de la pièce à usiner (30) devant être serrée.

13. Dispositif de serrage (1) selon l'une des revendications précédentes **caractérisé en ce que** le porte pièce à usiner (2) est doté sur son côté inférieur d'une douille de serrage (25) servant à une fixation sur un mandrin de serrage (31).

14. Dispositif de serrage (1) selon l'une des revendications précédentes **caractérisé en ce que** le porte pièce à usiner (2) est doté sur son côté inférieur d'au moins trois ouvertures de centrage ou douilles de centrage servant à un positionnement précis sur le mandrin de serrage (31).

15. Dispositif de serrage (1) selon la revendication 14, **caractérisé en ce que** le corps principal (3) est doté sur son côté inférieur d'un disque de centrage (18), dans lequel les ouvertures de centrage (18a) sont formées, sachant que le disque de centrage (18) est fixé au corps principal (3) à l'aide boulons d'écartement (17) formant le support z.
